# EUROPEAN PATENT APPLICATION

(11) **EP 4 571 882 A1**
(43) Date of publication of application: **18.06.2025**
(21) Application number: 24861347.3
(22) Date of filing: 28.06.2024
(51) Int. Cl.: H01M 4/38, H01M 10/0525, H01M 4/36, H01M 4/583

(54) **NEGATIVE ELECTRODE MATERIAL AND PREPARATION METHOD THEREFOR, AND BATTERY**

(30) Priority: 28.09.2023 CN 202311289564; 27.12.2023 CN 202311832248; 23.02.2024 CN 202410205115
(71) Applicant: BTR NEW MATERIAL GROUP CO., LTD., Shenzhen, Guangdong 518106 (CN)
(72) Inventor: HE, Peng, Shenzhen, Guangdong 518106 (CN); XIAO, Chengmao, Shenzhen, Guangdong 518106 (CN); LIU, Mingjie, Shenzhen, Guangdong 518106 (CN); REN, Jianguo, Shenzhen, Guangdong 518106 (CN); HE, Xueqin, Shenzhen, Guangdong 518106 (CN); CHEN, Xi, Shenzhen, Guangdong 518106 (CN); LIU, Yijia, Shenzhen, Guangdong 518106 (CN)
(74) Representative: Studio Torta S.p.A.
(86) International application number: PCT/CN2024/102619
(87) International publication number: WO 2025/066376

(57) **Abstract**

The application relates to the technical field of anode materials, and in particular, to anode material and preparation method thereof, and battery. The anode material includes an active substance. Surface compactness of the anode material is β, and β≥80%. β is measured by the following test methods: the anode material with mass of m₁ g is soaked in a hydrofluoric acid solution with a mass fraction of 20% for 1 hour, then washed and dried to obtain m₂ g of a material, and the surface compactness of the anode material is obtained through calculated, where β= m₂/m₁×100%. According to the anode material of the present disclosure, a surface of the anode material has high compactness, such that a dissolution amount of the anode material in a cyclic process may be reduced, so as to reduce reactions between dissolved silicon particles and electrolyte, thereby effectively reducing a gas production value of the anode material. Furthermore, the anode material is small in a total pore volume and more compact in structure, such that a penetration amount of the electrolyte in the anode material in the cyclic process is reduced, thereby improving the cycling performance of the anode material.

## Description

This application claims priority to Chinese Patent Application No. 202311289564.7 filed to the China National Intellectual Property Administration on September 28, 2023 and entitled "Anode Material and Preparation Method Therefor, and Lithium Ion Battery", claims priority to Chinese Patent Application No. 202311832248. X filed to the China National Intellectual Property Administration on December 27, 2023 and entitled "Anode Material and Battery", and claims priority to Chinese Patent Application No. 202410205115.8 filed to the China National Intellectual Property Administration on February 23, 2024 and entitled "Anode Material and Battery", the disclosures of which are hereby incorporated by reference in their entirety.

### Technical Field

The present disclosure relates to the technical field of anode materials, and specifically, to anode material and preparation method thereof, and battery.

### Background

Lithium-ion batteries have been widely used in the field of 3C because of the advantages of being high in energy density, long in service life, and free of environmental pollution, etc. With the development of the market, the lithium-ion batteries are widely used not only in mobile devices such as smartphones and portable computers, but also in the field of large-scale devices such as electric vehicles and power tools. In order to increase an energy density of the battery, the research and development of silicon-based anode materials is becoming more and more mature. The silicon-based anode material includes a silicon-based active substance and a coating layer on a surface of the silicon-based active substance. However, a coating layer of an existing silicon-based anode material is poor in coating effect, and during a process of preparing the silicon-based anode material into the lithium-ion battery, dissolved silicon particles are in contact with electrolyte, resulting in the problem of gas production.

Therefore, how to reduce reactions between the silicon particles and the electrolyte and reduce a gas production value is an urgent problem to be solved.

### Summary

The present disclosure provides anode material and preparation method thereof, and battery. A surface of the anode material has high compactness, such that reactions between silicon particles and electrolyte may be reduced, so as to reduce a gas production value, thereby improving the cycling performance of the material.

In first aspect, the present disclosure provides an anode material. The anode material includes an active substance. Surface compactness of the anode material is β, and β≥80%.

β is measured by the following test methods.

The anode material with mass of m₁ g is soaked in a hydrofluoric acid solution with a mass fraction of 20% for 1 hour, then washed and dried to obtain m₂ g of a material, and the surface compactness of the anode material is obtained through calculated, where β= m₂/m₁×100%.

In second aspect, the present disclosure provides a battery. The battery includes the above anode material.

The technical solution of the present disclosure has at least the following beneficial effects.

According to the anode material provided in the present disclosure, the anode material includes the active substance, and the surface compactness β of the anode material is ≥80%. Within the range, a dissolution amount of the anode material in a cyclic process may be reduced, so as to reduce reactions between dissolved active substance and electrolyte, thereby effectively reducing a gas production value of the anode material. Furthermore, side reactions due to the contact between the electrolyte and the active substance may also be reduced, thereby improving the cycling performance of a lithium ion battery.

### Brief Description of the Drawings

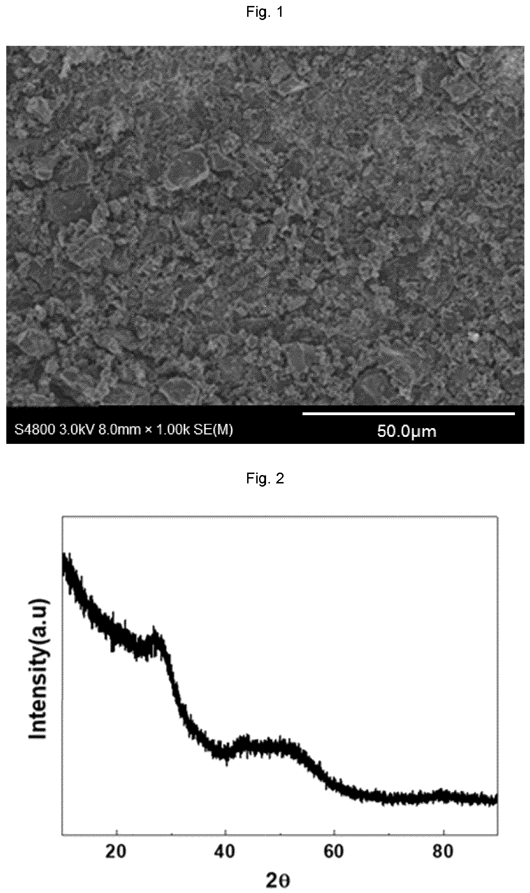

Fig. 1 is a Scanning Electron Microscope (SEM) picture of an anode material prepared according Embodiment 1 of the present disclosure.
Fig. 2 is an X-Ray Diffraction (XRD) diagram of an anode material prepared according Embodiment 1 of the present disclosure.

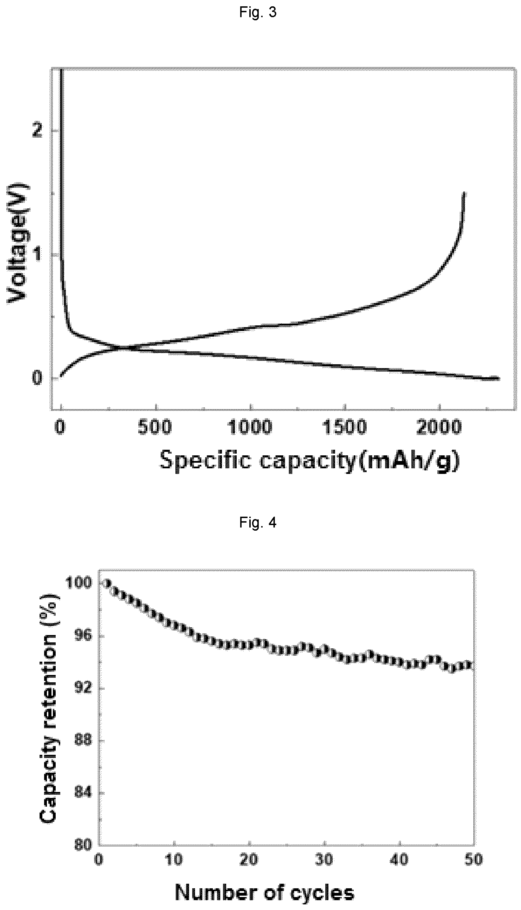

Fig. 3 is a first charging and discharging curve of an anode material prepared according Embodiment 1 of the present disclosure.
Fig. 4 is a cycling performance curve of an anode material prepared according Embodiment 1 of the present disclosure.

### Detailed Description of the Embodiments

The embodiments described below with reference to the accompanying drawings are exemplary and are merely used to explain the present disclosure, but explain not be construed as a limitation on the present disclosure.

Lithium-ion batteries have been widely used in the field of 3C because of the advantages of being high in energy density, long in service life, and free of environmental pollution, etc. With the development of the market, the lithium-ion batteries are widely used not only in mobile devices such as smartphones and portable computers, but also in the field of large-scale devices such as electric vehicles and power tools. In order to increase an energy density of the battery, the research and development of silicon-based anode materials is becoming more and more mature. The silicon-based anode material includes a silicon-based active substance and a coating layer on a surface of the silicon-based active substance. However, a coating layer of an existing silicon-based anode material is poor in coating effect, and during a process of preparing the silicon-based anode material into the lithium-ion battery, dissolved silicon particles are in contact with electrolyte, resulting in the problem of gas production.

In first aspect, the present disclosure provides an anode material. The anode material includes an active substance. Surface compactness of the anode material is β, and β≥80%.

β is measured by the following test methods.

The anode material with mass of m₁ g is soaked in a hydrofluoric acid solution with a mass fraction of 20% for 1 hour, then washed and dried to obtain m₂ g of a material, and the surface compactness of the anode material is obtained through calculated, where β= m₂/m₁×100%.

In the above solution, the anode material includes the active substance, and the surface compactness β of the anode material is ≥80%. Within the range, a dissolution amount of the anode material in a cyclic process may be reduced, so as to reduce reactions between the dissolved active substance in the anode material and electrolyte, thereby effectively reducing a gas production value of the anode material. Furthermore, side reactions due to the contact between the electrolyte and the active substance in the anode material may also be reduced, thereby improving the cycling performance of a lithium ion battery prepared by the anode material.

In some implementations, the surface compactness of the anode material is ≥80%, which may specifically be 80%, 82%, 85%, 86%, 89%, 90%, 92%, 95%, or 98%, etc., or may definitely be other values within the above range. It may be understood that, in an ideal state, the surface compactness of the anode material is 100%, and in this case, the anode material is high in surface compactness. When the anode material is placed in a dissolving solution, the active substance in the anode material is not dissolved, such that no active substance is dissolved to come into contact with and react with the dissolving solution. However, an anode material prepared by a conventional method is insufficient in surface compactness, the anode material has a certain dissolution amount in the dissolving solution, the dissolving solution contains the dissolved active substance, and in this case, the surface compactness of the anode material may be defined through the dissolution amount of the active substance, that is, surface compactness β= m₂/m₁×100%.

It should be noted that, the dissolving solution used in the present disclosure is the hydrofluoric acid solution with the mass fraction of 20%, and the dissolving solution is excessive.

Through the above test, the surface compactness β of the anode material of the present disclosure may be ≥80%. Within the range, in a process of preparing slurry, the high surface compactness characteristic of the anode material can effectively suppress the active substance in the anode material from being directly contact with water in the slurry, so as to reduce the occurrence of the side reactions, thereby reducing the gas production value of the anode material. Furthermore, the anode material may also reduce a dissolution amount of the active substance during charging and discharging cycles, so as to reduce the side reactions between the dissolved active substance and the electrolyte, and the gas production value of the anode material can also be effectively reduced.

In some implementations, the active substance includes a carbon matrix and silicon particles, and at least part of the silicon particles are located in particles of the carbon matrix.

In some implementations, the carbon matrix has pores, and the silicon particles are located in the pores of the carbon matrix. It may be understood that, the carbon matrix may play a role in supporting a skeleton and has good conductivity, such that the conductivity of the anode material may be improved. Meanwhile, the silicon particles may be located in the carbon matrix to reduce the contact between the silicon particles and the electrolyte, thereby guaranteeing the stability of an SEI membrane, and improving Initial Coulombic Efficiency (ICE). Furthermore, the carbon matrix with pores can effectively relieve volume expansion of the silicon particles in the cyclic process, thereby improving cycling performance.

In some implementations, the carbon matrix includes at least one of artificial graphite, natural graphite, amorphous carbon, activated carbon, mesocarbon microbeads, carbon nanotubes, carbon nanofibers, porous carbon, and graphene. It may be understood that, the carbon matrix may play a role in supporting the skeleton by selecting the above materials, and also has good electric conductivity, thereby guaranteeing the conductivity of the anode material. Moreover, the silicon particles all have an excellent lithium storage function by being deposited in the carbon matrix.

In some implementations, the silicon particle includes at least one of crystalline silicon, silicon oxide, amorphous silicon, silicon alloy, or a composite particle of the crystalline silicon and the amorphous silicon; and types of the carbon matrices and silicon particles may be selected according to requirements, and are not limited herein.

In some implementations, the silicon oxide includes silicon and oxygen, and an atomic ratio of the silicon to the oxygen is 0-2 and does not include 0. The atomic ratio of the silicon to the oxygen may specifically be 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, 1.9, or 2, etc., which is not limited herein. Preferably, the atomic ratio of the silicon to the oxygen is 0-1 and does not include 0.

In some implementations, a general chemical formula of the silicon oxide is SiOₓ, where 0 < x < 2, x may specifically be 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, or 1.9, etc., which is not limited herein. Preferably, 0<x<1.

In some implementations, an average particle size of the silicon particles is 0.1 nm-50 nm. Optionally, the average particle size of the silicon particles may be specifically be 0.1 nm, 10 nm, 20 nm, 30 nm, 40 nm, or 50 nm, etc., or may be other values within the range, may be selected according to actual requirements, and is not limited herein. Mechanical stress of the silicon particles when expanding reduces with the reduction of the particle size, and a transmission path between electrons and ions may be shortened after the size is reduced. Meanwhile, as the size of the silicon particle is reduced, a gap between the adjacent silicon particles increases, such that a space may be reserved for expansion. It may be understood that, the average particle size of the silicon particles is within the above range, such that a battery capacity of lithium ion battery may be guaranteed, and an irreversible capacity loss is reduced. Preferably, the average particle size of the silicon particles is 0.1 nm-20 nm, and more preferably, the average particle size of the silicon particles is 0.1 nm-5 nm.

In some implementations, the morphology of the silicon particles includes at least one of a dot shape, a spherical shape, an ellipsoidal shape, and a flaky shape. The morphology of the silicon particles may be selected according to actual requirements, and is not limited herein.

In some implementations, the purity of the silicon particles is greater than 99%. It may be understood that, the high-purity silicon particles facilitate Li-Si alloying with lithium, such that the cycling performance of the lithium ion battery is improved.

In some implementations, a total pore volume of the anode material is 0.001 cm³/g-0.1 cm³/g, which may specifically be 0.001 cm³/g, 0.005 cm³/g, 0.006 cm³/g, 0.007 cm³/g, 0.01 cm³/g, 0.02 cm³/g, 0.03 cm³/g, 0.04 cm³/g, 0.05 cm³/g, 0.06 cm³/g, 0.08 cm³/g, or 0.1 cm³/g, etc., or may definitely be other values within the above range, and is not limited herein. After the silicon particles are filled, the remaining aperture gaps can reserve spaces for volume expansion of the silicon particles, so as to relieve an expansion effect of the anode material, thereby improving the cycling stability of the anode material; a very small amount of gas generated due to side reactions between partial silicon particles and the electrolyte can also be adsorbed or housed, thereby improving a gas production phenomenon of the anode material. Preferably, the total pore volume of the anode material is 0.001 cm³/g-0.02 cm³/g. By controlling the total pore volume of the anode material within the range, an infiltration amount of the electrolyte directly infiltrating in the particles of the anode material through pore structures can be effectively reduced.

In some implementations, a volume proportion of the pores with apertures below 10 nm in the total pore volume in the anode material is ≥80%, which may specifically be 80%, 82%, 85%, 87%, 90%, 93%, 95%, or 99%, etc., or may definitely be other values within the above range, and is not limited herein.

In the above solution, while controlling the surface compactness of the anode material to be ≥80%, the total pore volume of the anode material is controlled to be 0.001 cm³/g-0.1 cm³/g, and the volume proportion of the pores with apertures below 10 nm in the total pore volume is controlled to be ≥80%. During charging and discharging, the aperture gaps may reserve spaces for the volume expansion of the silicon particles in a lithium deintercalation process. In the present disclosure, by controlling the surface compactness of the anode material to cooperate with the pores of the anode material, the volume expansion of the silicon particles in the cyclic process is effectively relieved to reduce particle breakage of the anode material, thereby improving the cycling performance of the anode material. Meanwhile, the volume proportion of the pores with apertures below 10 nm in the total pore volume is ≥80%, that is, a proportion of the pores with apertures above 10 nm is small, there are very few macropores in the anode material particles, such that cracks in the anode material during the cyclic process may be reduced to reduce the risk of a direct contact between the silicon particles and the electrolyte, thereby reducing side reactions. In some implementations, while the surface compactness β of the anode material is ≥80%, the anode material has pores, and the pores include micropores and mesopores. A ratio of a pore volume of the micropores to a pore volume of the mesopores is (1-45):(55-99).

Specifically, a pore volume proportion of the micropores and the mesopores may be 1:99, 5:95, 10:90, 20:80, 30:65, 40:50, or 45:55, etc., which is not limited herein. In the present disclosure, the mesopores have a large pore volume proportion, and the micropores have a small pore volume proportion. Since sizes of molecules generated by the electrolyte are generally less than or equal to the apertures of the micropores, the micropores have strong capillary adsorption capacities, an adsorption capacity of the anode material is largely proportional to the pore volume of the micropores, that is, as the volume of the micropores increases, the adsorption capacity of the anode material is increased, and the side reactions between the anode material and the electrolyte are increased.

In the present disclosure, by controlling the ratio of the pore volume of the micropores to the pore volume of the mesopores to be (1-45):(55-99), the pore volume proportion of the micropores in the anode material is effectively reduced, that is, active sites of the anode material to undergo the side reactions with the electrolyte are reduced, such that the thickening of a solid state electrolyte membrane on a surface of the anode material due to continuous invasion of the electrolyte may be reduced, thereby improving the cycling performance of the anode material. Furthermore, the mesopores with increased volume proportion may reserve enough buffer spaces for the volume expansion of the silicon particles, facilitating improvement of the structure stability of the particles of the anode material. In the present disclosure, by controlling the surface compactness of the anode material and the volume proportions of the micropores and mesopores of the anode material, through the cooperation of the two, the dissolving of the silicon particles is reduced to reduce the side reactions between the anode material and the electrolyte, such that the volume expansion of the silicon particles in the cyclic process is effectively relieved to reduce particle breakage of the anode material, thereby comprehensively improving the cycling performance of the anode material.

In some implementations, the pore volume proportion of the mesopores in the anode material is ≥80%, which may specifically be 80%, 82%, 85%, 87%, 90%, 93%, 95%, or 99%, etc., or may definitely be other values within the above range, and is not limited herein.

In some implementations, the pore volume proportion of the micropores in the anode material is ≤10%, which may specifically be 10%, 9%, 8%, 7%, 6%, 5%, 4%, 3%, 2%, 1%, or 0%, etc., or may definitely be other values within the above range, and is not limited herein.

In some implementations, a pore volume proportion of macropores in the anode material is ≤20%, which may specifically be 20%, 18%, 15%, 12%, 10%, 8%, 7%, 5%, 4%, 3%, or 2%, etc., or may definitely be other values within the above range, and is not limited herein.

It may be understood that, by controlling the volume proportions of the micropores, mesopores, and macropores in the anode material within the above ranges, the uniformity of distribution of the silicon particles in the anode material may be improved. Since most of the pores are the mesopores, the volume expansion of the silicon particles may be effectively relieved, the fracture and pulverization of the anode material due to excessive local expansion stress caused by uneven volume changes in the silicon particles in the anode material in the cyclic process are reduced, thereby improving the cycling stability of the anode material.

In some implementations, the average aperture of the anode material is 0.4 nm-50 nm, which may specifically be 0.4 nm, 1 nm, 1.5 nm, 2 nm, 3 nm, 5 nm, 10 nm, 20 nm, 30 nm, 40 nm, or 50 nm, etc., or may definitely be other numerical values within the above range, and is not limited herein.

In some implementations, the anode material with the silicon particles removed has pores, and the pores include micropores.

In some implementations, in the anode material with silicon particles removed, a volume proportion of the pores with apertures below 2 nm in the total pore volume is ≥70%, which may specifically be 70%, 75%, 80%, 85%, 90%, 95%, or 99%, etc., or may definitely be other values within the above range, and is not limited herein.

In some implementations, the anode material with silicon particles removed has pores, and the pores include micropores and mesopores. In the anode material with silicon particles removed, a volume proportion of the pores with apertures below 5 nm in the total pore volume is ≥85%, which may specifically be 85%, 87%, 89%, 90%, 92%, 95%, 97%, or 99%, etc., or may definitely be other values within the above range, and is not limited herein.

In some implementations, in the anode material with silicon particles removed, a volume proportion of the pores with apertures below 10 nm in the total pore volume is ≥95%, which may specifically be 95%, 96%, 97%, 98%, or 99%, etc., or may definitely be other values within the above range, and is not limited herein.

It may be understood that, for the anode material (i.e., the carbon matrix) with silicon particles removed, by controlling the volume proportion of the pores within the above range, the pores can house most of the silicon particles, such that silicon segregation formed by deposition of the silicon particles on a surface of the carbon matrix is reduced, and the content of the silicon particles in the carbon matrix and the distribution uniformity of the silicon particles are improved, thereby improving the specific capacity and mechanical properties of the anode material.

In some implementations, the anode material with the silicon particles removed further includes macropores.

In some implementations, a total pore volume of all the pores in the anode material with the silicon particles removed is 0.5 cm³/g-1.5 cm³/g, which may specifically be 0.5 cm³/g, 0.6 cm³/g, 0.7 cm³/g, 0.8 cm³/g, 0.9 cm³/g, 1.0 cm³/g, 1.1 cm³/g, 1.2 cm³/g, 1.3 cm³/g, 1.4 cm³/g, or 1.5 cm3/g, etc., or may definitely be other values within the above range, and is not limited herein. It may be understood that, the anode material with the silicon particles removed is rich in pore. These pores can house the silicon particles, and reserve spaces for the volume expansion of the silicon particles. Preferably, the total pore volume of all the pores in the anode material with the silicon particles removed is 1.0 cm³/g-1.5 cm³/g.

In the present disclosure, the total pore volume of the anode material containing the silicon particles is greatly reduced compared to the anode material with the silicon particles removed, this is because the silicon particles are relatively uniformly filled, most of the aperture gaps are filled with the silicon particles, and then the pore volume contracts. Therefore, it indicates that the pores of the carbon matrix are effectively, relatively uniformly filled by the silicon particles, thereby improving the specific capacity of the anode material.

In some implementations, a specific surface area of the anode material with the silicon particles removed is 500 m²/g-2000 m²/g. The specific surface area may be 500 m²/g, 800 m²/g, 1000 m²/g, 1200 m²/g, 1400 m²/g, 1600 m²/g, 1800 m²/g, 1900 m²/g, or 2000 m²/g, etc., or may definitely be other values within the above range, which is not limited herein. Preferably, the specific surface area of the anode material with the silicon particles removed is 1200 m²/g-2000 m²/g.

In some implementations, at least partial surface of the anode material has a coating layer, and a material of the coating layer includes a carbon material.

In some implementations, the carbon material includes at least one of amorphous carbon and graphitized carbon.

It may be understood that, the coating layer located at the outermost layer of the anode material has good conductivity, on one hand, the conductivity of the anode material may be improved, on the other hand, the silicon particles exposed from the surface of the carbon matrix may be coated, such that continuous oxidation of the exposed silicon particles during placement is reduced, and the reduction of the specific capacity and ICE of the anode material is reduced. The coating layer may also reduce the direct contact between the active substance and the electrolyte, so as to guarantee the stability of an SEI membrane, thereby improving the ICE of the anode material. Furthermore, during coating, the material of the coating layer further fills gaps in the active substance, so as to reduce the total pore volume of the anode material, such that an infiltration amount of the electrolyte directly infiltrating in the particles of the anode material through pore structures can be effectively reduced, and side reactions due to the contact between the electrolyte and the active substance is reduced, thereby improving the cycling performance of an ion battery prepared by the anode material.

In some implementations, a thickness of the coating layer is 1 nm-300 nm. Optionally, the thickness of the coating layer may specifically be 1 nm, 50 nm, 150 nm, 200 nm, 250 nm, or 300 nm, etc., or may be other values within the range, may be selected according to actual requirements, and is not limited herein. It may be understood that, the coating layer may reduce the solubility of the anode material, so as to reduce a gas production amount of the reaction between the dissolved silicon particles and the electrolyte. By controlling the thickness of the coating layer within the above range, the stability of the particle structures of the anode material during the cyclic process is maintained, such that Si exposed from the surface of the anode material may be reduced, and a large number of SEls generated during charging and discharging due to the exposed silicon are reduced, thereby improving the specific capacity and electrochemical performance of the anode material. Preferably, the thickness of the coating layer is 1 nm-50 nm, and more preferably, the thickness of the coating layer is 1 nm-30 nm.

In some implementations, a mass proportion of the coating layer in the anode material is ≤10%, which may specifically be 10%, 9%, 8%, 7%, 6%, 5%, 4%, 3%, 2%, or 1%, etc., or may definitely be other values within the above range, and is not limited herein. It may be understood that, the coating layer may reduce the solubility of the anode material, so as to reduce a gas production amount of the reaction between the dissolved silicon particles and the electrolyte. The mass proportion of the coating layer in the anode material is within the above range, such that a lithium intercalation amount of the anode material may be guaranteed, thereby guaranteeing the charging and discharging capacities of the lithium ion battery prepared by the anode material.

In some implementations, a median particle size D₅₀ of the anode material is ≤10 µm, which may specifically be 10 µm, 9 µm, 8 µm, 7 µm, 6 µm, 5 µm, 4 µm, 3 µm, 2 µm, or 1 µm, etc., or may definitely be other values within the above range, and is not limited herein. It may be understood that, the median particle size refers to a particle size of the anode material located in a middle position after the particles of the anode material are sorted according to sizes. The median particle size of the anode material is within the above range, it may ensure the time for embedding and detachment of lithium ions, such that the anode material may achieve a state of rapid and full lithium intercalation, thereby guaranteeing the charging and discharging performance of the lithium ion battery.

In some implementations, particle size distribution of the anode material meets: 0.9≤(D₉₀-D₁₀)/D₅₀≤5, which may specifically be 0.9, 1.0, 1.5, 2.0, 2.5, 3.0, 3.5, 4, 4.5, or 5, etc., or may definitely be other values within the above range, and is not limited herein. The particle size distribution of the anode material is within the above range, large particles with large particle sizes of the anode material and small particles with small particle sizes can cooperated with each other, the small particles fill in aperture gaps among the large particles, such that the tap density of the anode material may be increased.

In some implementations, the specific surface area of the anode material is ≤10 m²/g, which may specifically be 10 m²/g, 8.9 m²/g, 6.8 m²/g, 5.5 m²/g, 4.2 m²/g, 4 m²/g, 3 m²/g, 2.5 m²/g, 2 m²/g, or 1 m²/g, etc., or may definitely be other values within the above range, and is not limited herein. It may be understood that, the specific surface area of the anode material affects a contact area between the anode material and the electrolyte. The specific surface area of the anode material is within the above range, such that the amount of lithium ions consumed by the SEI membrane formed during the first charging and discharging of the lithium ion battery may be reduced, thereby reducing an irreversible capacity loss of the lithium ion battery. Preferably, the specific surface area of the anode material is ≤5 m²/g.

In some implementations, the compaction density of the anode material is 0.8 g/cm³-1.3 g/cm³, which may specifically be 0.8 g/cm³, 0.9 g/cm³, 1.0 g/cm³, 1.1 g/cm³, 1.2 g/cm³, or 1.3 g/cm³, etc., or may definitely be other values within the above range, and is not limited herein.

In some implementations, the tap density of the anode material is 0.5 g/cm³-1.5 g/cm³, which may specifically be 0.5 g/cm³, 0.6 g/cm³, 0.7 g/cm³, 0.8 g/cm³, 0.9 g/cm³, 1.0 g/cm³, 1.1 g/cm³, 1.2 g/cm³, 1.3 g/cm³, 1.4 g/cm³, or 1.5 g/cm³, etc., or may definitely be other values within the above range, and is not limited herein.

In some implementations, powder conductivity of the anode material at 20 kN is 0.5 S/cm-5 S/cm, which may specifically be 0.5 S/cm, 0.8 S/cm, 1.0 S/cm, 1.2 S/cm, 1.5 S/cm, 2 S/cm, 3 S/cm, 4 S/cm, or 5.0 S/cm, etc., or may definitely be other values within the above range, and is not limited herein. The powder conductivity of the anode material is controlled within the above range, such that the electrochemical performance of the anode material may be effectively improved. Preferably, the powder conductivity of the anode material at 20 kN is 0.5 S/cm-2 S/cm.

In some implementations, a mass content of carbon in the anode material is 20%-80%, which may specifically be 20%, 25%, 30%, 40%, 45%, 50%, 55%, 60%, 65%, 70%, 75%, or 80%, etc., or may definitely be other values within the above range, and is not limited herein.

In some implementations, a mass content of silicon in the anode material is 20%-60%, which may specifically be 20%, 25%, 30%, 32%, 35%, 38%, 40%, 42%, 45%, 48%, 50%, 55%, or 60%, etc., or may definitely be other values within the above range, and is not limited herein. It may be understood that, by controlling the mass content of the silicon within the above range, the volume expansion of the anode material and the capacity of the anode material can be effectively controlled at the same time. Preferably, the mass content of the silicon in the anode material is 45%-55%.

In some implementations, the anode material further includes a trace metal element, and the trace metal element includes at least one of Fe, Co, Ni, Cr, Zn, Cu, and Al.

In some implementations, in the anode material, a mass proportion of the trace metal element is ≤200 ppm, which may specifically be 200 ppm, 180 ppm, 160 ppm, 150 ppm, 140 ppm, 130 ppm, 120 ppm, 100 ppm, or 50 ppm, etc., or may definitely be other values within the above range, and is not limited herein.

In some implementations, average gas production of anode slurry that is prepared by the anode material and placed in a 25 °C environment for 7 days is ≤1 mL/kg/day, which may specifically be 1 mL/kg/day, 0.8 mL/kg/day, 0.6 mL/kg/day, 0.5 mL/kg/day, 0.4 mL/kg/day, 0.3 mL/kg/day, 0.2 mL/kg/day, or 0.1 mL/kg/day, etc., or may definitely be other values within the above range, and is not limited herein. A gas production value of the anode material of the present disclosure is controlled within the above range, it may be seen that most of the silicon particles can relatively uniformly distributed in the pores of the carbon matrix, the direct contact between the silicon particles and the electrolyte is reduced, such that the side reactions (i.e., silicon is hydrolyzed into silicate and hydrogen) between the dissolved silicon particles and the electrolyte are reduced, and the gas production value of the anode material can also be effectively reduced. When the surface compactness of the anode material is insufficient, the gas production value of the anode material significantly increases.

According to second aspect, the present disclosure provides a method for preparing a anode material. The preparation method includes the following steps.

At S10, a complex is prepared, and the complex includes an active substance and a catalyst.

At S20, the complex is coated to obtain an anode material, where surface compactness of the anode material is β, and β≥80%.

In the above solution, the catalyst is added when the active substance is prepared. During coating, the catalyst causes a coating material to form a coating layer with high compactness on a surface of the active substance, such that the problem in the related art of the consumption of the highly-active silicon particles reacting with the carbon matrix caused by high cracking temperature for ensuring the complete cracking of a gas source when the coating layer is prepared by using vapor deposition is solved, thereby guaranteeing the charging and discharging capacities of the lithium ion battery.

In the related art, the gas source generally used for gas-phase coating such as methane and acetylene can be completely cracked with a high temperature (methane > 1000 °C, and acetylene > 800 °C), so as to form the relatively-compact coating layer. However, at a high temperature, due to the high activity of the deposited silicon particles, the generation of SiC is caused generally, such that current gas-phase coating is generally performed at a low temperature (500 °C-800 °C). However, at the temperature of 500 °C-800 °C, the cracking of a gas source precursor is insufficient, a carbon coating layer formed on surfaces of the particles is not compact, and there are large amounts of incomplete cracking products, causing the gas production problem to be unable to be completely solved.

The preparation method of the present disclosure is specifically introduced with reference to embodiments.

In S10, the specific step of preparing the complex includes: the carbon matrix is soaked in a solution containing the catalyst, and silicon particle deposition is performed on a product after solid-liquid separation, so as to obtain the complex.

In some implementations, the carbon matrix used in the preparation method includes at least one of artificial graphite, natural graphite, amorphous carbon, activated carbon, mesocarbon microbeads, carbon nanotubes, carbon nanofibers, and graphene. It may be understood that, the carbon matrix may play a role in supporting a skeleton by selecting the above materials, and also has good electric conductivity, thereby guaranteeing the conductivity of the anode material.

In some implementations, the prepared carbon matrix is soaked in the catalyst solution such that the catalyst is attached to a surface of the carbon matrix or in the carbon matrix. The catalyst solution is a salt solution containing at least one of Cu, Ni, Co, Fe, and B. It may be understood that, the catalyst contains the above elements, and a temperature during coating may be reduced, so as to obtain the compact coating layer at a low temperature.

In some implementations, the carbon matrix has pores, and the pores includes micropores, mesopores and macropores.

In some implementations, in the carbon matrix, a volume proportion of the pores with apertures below 2 nm in the total pore volume is ≥70%, which may specifically be 70%, 75%, 80%, 85%, 90%, 95%, or 99%, etc., or may definitely be other values within the above range, and is not limited herein.

In some implementations, in the carbon matrix, a volume proportion of the pores with apertures below 5 nm in the total pore volume in the anode material is ≥85%, which may specifically be 85%, 87%, 89%, 90%, 92%, 95%, 97%, or 99%, etc., or may definitely be other values within the above range, and is not limited herein.

In some implementations, in the carbon matrix, a volume proportion of the pores with apertures below 10 nm in the total pore volume is ≥95%, which may specifically be 95%, 96%, 97%, 98%, or 99%, etc., or may definitely be other values within the above range, and is not limited herein.

It may be understood that, by controlling the volume proportion of the pores of the carbon matrix within the above range, the pores can house most of the silicon particles, such that silicon segregation formed by deposition of the silicon particles on a surface of the carbon matrix is reduced, and the content of the silicon particles in the carbon matrix and the distribution uniformity of the silicon particles are improved, thereby improving the specific capacity and mechanical properties of the anode material.

In some implementations, a specific surface area of the carbon matrix is 500 m²/g-2000 m²/g. The specific surface area may be 500 m²/g, 800 m²/g, 1000 m²/g, 1200 m²/g, 1400 m²/g, 1600 m²/g, 1800 m²/g, 1900 m²/g, or 2000 m²/g, etc., or may definitely be other values within the above range, which is not limited herein. Preferably, the specific surface area of the carbon matrix is 1200 m²/g-2000 m²/g.

In some implementations, a total pore volume of all the pores in the carbon matrix is 0.5 cm³/g-1.5 cm³/g, which may specifically be 0.5 cm³/g, 0.6 cm³/g, 0.7 cm³/g, 0.8 cm³/g, 0.9 cm³/g, 1.0 cm³/g, 1.1 cm³/g, 1.2 cm³/g, 1.3 cm³/g, 1.4 cm³/g, or 1.5 cm³/g, etc., or may definitely be other values within the above range, and is not limited herein. It may be understood that, the carbon matrix is rich in pore. These pores can house the silicon particles, and reserve spaces for the volume expansion of the silicon particles. Preferably, the total pore volume of all the pores in the carbon matrix is 0.6 cm³/g-1.0 cm³/g.

In some implementations, a concentration of the solution containing the catalyst is 0.1 mol/L-2.5 mol/L. Optionally, the concentration may specifically be 0.1 mol/L, 0.5 mol/L, 1.2 mol/L, or 2.5 mol/L, etc., or may be other values within the range, may be selected according to actual requirements, and is not limited herein. It may be understood that, the concentration of the catalyst is within the above range, the surface compactness of the anode material is improved. If the concentration of the catalyst is too high, the content of the catalyst adhered to the carbon matrix is too high, leading to an increase in the thickness of the coating layer on the surface of the anode material; and the electrolyte difficulty and effectively soak the anode material particles due to too large thickness of the coating layer, blocking the transmission of lithium ions, thus reducing the rate performance of the anode material.

In some implementations, a soaking time is 10 min-60 min. Optionally, the soaking time may specifically be 10 min, 20 min, 30 min, 50 min, or 60 min, etc., or may be other values within the range, may be selected according to actual requirements, and is not limited herein. It may be understood that, the soaking time is within the above range, and an adhesion amount of the catalyst may be increased, thereby facilitating improvement of the surface compactness of the anode material.

In some implementations, a drying temperature is 80 °C-120 °C, which may specifically be 80 °C, 90 °C, 100 °C, 110 °C, or 120 °C, etc., or may be other values within the range, may be selected according to actual requirements, and is not limited herein.

In some implementations, the silicon particle includes at least one of crystalline silicon, silicon oxide, amorphous silicon, silicon alloy, or a composite particle of the crystalline silicon and the amorphous silicon; and types of the silicon particles may be selected according to requirements, and are not limited herein. The silicon alloy may be silicon lithium alloy, silicon magnesium alloy, silicon nickel alloy, or the like.

In some implementations, the silicon oxide includes silicon and oxygen, and an atomic ratio of the silicon to the oxygen is 0-2 and does not include 0. The atomic ratio of the silicon to the oxygen may specifically be 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, 1.9, or 2, etc., which is not limited herein. Preferably, the atomic ratio of the silicon to the oxygen is 0-1 and does not include 0.

In some implementations, a general chemical formula of the silicon oxide is SiOₓ, where 0 < x < 2, x may specifically be 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, or 1.9, etc., which is not limited herein. Preferably, 0<x<1.

In some implementations, an average particle size of the silicon particles is 0.1 nm-50 nm. Optionally, the average particle size of the silicon particles may be specifically be 0.1 nm, 10 nm, 20 nm, 30 nm, 40 nm, or 50 nm, etc., or may be other values within the range, may be selected according to actual requirements, and is not limited herein. Mechanical stress of the silicon particles when expanding reduces with the reduction of the particle size, and a transmission path between electrons and ions may be shortened after the size is reduced. Meanwhile, as the size of the silicon particle is reduced, a gap between the adjacent silicon particles increases, such that a space may be reserved for expansion. It may be understood that, the average particle size of the silicon particles is within the above range, such that a battery capacity of lithium ion battery may be guaranteed, and an irreversible capacity loss is reduced. Preferably, the average particle size of the silicon particles is 0.1 nm-20 nm, and more preferably, the average particle size of the silicon particles is 0.1 nm-5 nm.

In some implementations, the morphology of the silicon particles includes at least one of a dot shape, a spherical shape, an ellipsoidal shape, and a flaky shape. The morphology of the silicon particles may be selected according to actual requirements, and is not limited herein.

In some implementations, the purity of the silicon particles is greater than 99%. It may be understood that, the high-purity silicon particles facilitate Li-Si alloying with lithium, such that the cycling performance of the lithium ion battery is improved.

In some implementations, a deposition mode of the silicon particles may be vapor deposition or liquid deposition. The deposition mode of the silicon particles may be selected according to actual requirements, and is not limited herein.

Preferably, the deposition mode of the silicon particles is chemical vapor deposition, and a step includes: a silicon-containing gas source is introduced to undergo a chemical vapor deposition reaction with the carbon matrix.

In some implementations, the silicon-containing gas source includes at least one of monosilane, disilane, trisilane, and tetrasilane, which may be selected according to actual requirements, and is not limited herein.

In some implementations, a concentration of the silicon-containing gas source is 1%-80%. Optionally, the concentration of the silicon-containing gas source may specifically be 1%, 13%, 26%, 43%, 55%, 68%, or 80%, etc., or may be other values within the range, may be selected according to actual requirements, and is not limited herein.

In an implementation, gases introduced include the silicon-containing gas source and an auxiliary carrier gas. The auxiliary carrier gas can dilute the silicon-containing gas source, and is conductive to controlling a retention time of the silicon-containing gas source. The auxiliary carrier gas includes at least one of nitrogen, argon, and helium.

In some implementations, a volume ratio of the silicon-containing gas source to the auxiliary carrier gas is 1:(1-10), which may specifically be 1:1, 1:2, 1:3, 1:4, 1:5, 1:6, 1:7, 1:8, 1:9, or 1:10, etc., or may be other values within the above range, and may be selected within the above range according to actual requirements.

In some implementations, the gases introduced further include a dopant gas, which may specifically be NH₃ or PH₃.

In some implementations, an air pressure of the chemical vapor deposition reaction is 10 kPa - normal pressure.

In some implementations, a temperature of the chemical vapor deposition reaction is 300 °C-800 °C, and a temperature-holding time is 1 h-15 h. Optionally, the temperature may specifically be 300 °C, 420 °C, 500 °C, 600 °C, 700 °C, 750 °C, or 800 °C, etc. The time may specifically be 1 h, 3 h, 4 h, 6 h, 7 h, 8 h, 10 h, 12 h, or 15 h, etc., or may be other values within the range, may be selected according to actual requirements, and is not limited herein. Preferably, the temperature of the chemical vapor deposition reaction is 400 °C-600 °C, and the temperature-holding time of the chemical vapor deposition reaction is 2 h-6 h.

By controlling reaction parameters of the chemical vapor deposition reaction, the gas phase silicon source can permeate in the carbon matrix, and is decomposed in the pores of the carbon matrix, so as to form the silicon particles with appropriate particle sizes through deposition.

In some implementations, a liquid phase silicon source may also be used to combine with the carbon matrix. The liquid phase silicon source includes at least one of monochlorosilane, dichlorosilane, trichlorosilane, and tetrachlorosilane. When the liquid phase silicon source is used, a combination pressure may be 1 mtorr to 760 mtorrs, and a temperature of a combination process may be 300 °C to 450 °C.

In some implementations, a thickness of the coating layer prepared in S20 is 1 nm-300 nm. Optionally, the thickness of the coating layer may specifically be 1 nm, 50 nm, 150 nm, 200 nm, 250 nm, or 300 nm, etc., or may be other values within the range, may be selected according to actual requirements, and is not limited herein. It may be understood that, the coating layer may reduce the solubility of the anode material, so as to reduce a gas production amount of the reaction between the dissolved silicon particles and the electrolyte. By controlling the thickness of the coating layer within the above range, the stability of the particle structures of the anode material during the cyclic process is maintained, the dissolving of the silicon particles is reduced, and the transmission efficiency of lithium ions is improved, thereby improving the charging and discharging performance of the anode material. Preferably, the thickness of the coating layer is 1 nm-50 nm, and more preferably, the thickness of the coating layer is 1 nm-30 nm.

In some implementations, a mass proportion of the coating layer in the anode material is ≤ 10%. It may be understood that, the coating layer may reduce the solubility of the anode material, so as to reduce a gas production amount of the reaction between the dissolved silicon particles and the electrolyte. The mass proportion of the coating layer in the anode material is within the above range, such that a lithium intercalation amount of the anode material may be guaranteed, thereby guaranteeing the charging and discharging capacities of the lithium ion battery prepared by the anode material.

In some implementations, coating the complex includes: the complex and a coating material are mixed for heating, where the coating material includes a carbon material.

In some implementations, the carbon material includes at least one of amorphous carbon and graphitized carbon.

In some implementations, a mass ratio of an active substance to the coating material is 100:(1-100). Optionally, the mass ratio may specifically be 100:1, 100:10, 100:20, 100:40, 100:60, 100:70, or 100:100, etc., or may be other values within the range, may be selected according to actual requirements, and is not limited herein.

In some implementations, coating the complex includes: the complex and the coating material are mixed for heating, where a heating temperature is 400 °C-800 °C, and a temperature-holding time for heating is 1 h-15 h.

In some implementations, the heating temperature is 400 °C-800 °C, and the temperature-holding time for heating is 1 h-15 h. optionally, the temperature may be 400 °C, 500 °C, 600 °C, or 800 °C, etc., and the time may specifically be 1 h, 3 h, 5 h, 6 h, 8 h, 10 h, 11 h, 12 h, or 15 h, etc., or may be other values within the range, may be selected according to actual requirements, and is not limited herein.

In some implementations, heating is performed under a protective gas. The protective gas includes at least one of nitrogen, helium, neon, argon, and krypton, which may be selected according to actual requirements, and is not limited herein.

In the above technical solution, a surface of the active substance is coated, so as to form the coating layer on the surface of the active substance. On one hand, a reduction in ICE and specific capacity caused by the side reactions due to the entering of the electrolyte in the anode material may be reduced, such that the volume expansion of the anode material can be further solved, and the conductivity of the anode material is improved, thereby reducing the volume expansion of the entire anode material, and reducing the swelling of an electrode plate. During coating, a small amount of the coating material enters the pores of the anode material.

It should be noted that, the coating process of the present disclosure is performed with the premise of minimizing crystalline changes in a silicon-carbon anode material.

Preferably, carbon coating is performed on the complex in S20, and the carbon coating includes at least one of solid phase carbon coating, liquid phase carbon coating, and gas phase carbon coating.

In some implementations, the carbon coating is the gas phase carbon coating, and a step includes: the complex is heated, then the protective gas and a carbon source gas are introduced, and thermal cracking is performed on the carbon source gas, so as to obtain the anode material.

In some implementations, the carbon source gas is hydrocarbon.

In some implementations, the carbon source gas includes at least one of methane, ethane, propane, ethylene, acetylene, gaseous benzene, gaseous toluene, gaseous xylene, gaseous ethanol, and gaseous acetone.

In some implementations, the protective gas and the carbon source gas are introduced, and an air pressure is maintained within a range of 1 kPa-10 kPa.

In some implementations, a temperature for thermal cracking is 400 °C-800 °C, and a temperature-holding time is 0.5 h-18 h. Optionally, the temperature may specifically be 400 °C, 500 °C, 600 °C, 700 °C, or 800 °C, etc., and the temperature-holding time may specifically be 0.5 h, 1.5 h, 3 h, 5 h, 6 h, 7 h, 8 h, 10 h, or 18 h, etc., or may be other values within the range, may be selected according to actual requirements, and is not limited herein.

In some implementations, a volume ratio of the carbon source gas to the protective gas is 1:(0.1-20). Optionally, the volume ratio may specifically be 1:0.1, 1:1, 1:2, 1:5, 1:10, 1:15, or 1:20, etc., or may be other values within the range, may be selected according to actual requirements, and is not limited herein.

In some implementations, a flow of the carbon source gas is 100 sccm-500 sccm, which may specifically be 100 sccm, 200 sccm, 250 sccm, 300 sccm, 350 sccm, 400 sccm, 450 sccm, or 500 sccm, etc., or may definitely be other values within the above range, and is not limited herein. Preferably, the flow of the carbon source gas is 200 sccm-300 sccm.

By controlling parameters of the volume ratio of the carbon source gas to the protective gas, a gas flow, a reaction air pressure, etc., the carbon material obtained through the cracking of the carbon source gas can be deposited on a surface of the complex.

In some implementations, the deposition coating of the carbon source gas is performed under a rotation condition in a reaction furnace, and homogeneous-phase in-situ carbon coating on the surface of the complex is realized.

In some implementations, the carbon coating is the solid phase carbon coating, and a step includes: a mixture obtained by mixing the complex with a solid phase carbon source is carbonized to obtain the anode material.

In some implementations, a carbonization temperature is 400 °C-800 °C, and a carbonization time is 1 h-15 h. Optionally, the temperature may specifically be 400 °C, 500 °C, 600 °C, 700 °C, or 800 °C, etc., and the time may specifically be 1 h, 2 h, 4 h, 6 h, 8 h, 9 h, 11 h, 12 h, or 15 h, etc., or may be other values within the range, may be selected according to actual requirements, and is not limited herein.

In some implementations, the solid phase carbon source includes at least one of sugar, ester, hydrocarbon, organic acid, and high molecular polymer.

In some implementations, the solid phase carbon source includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some implementations, a mass ratio of the solid phase carbon source to the active substance is 100:(10-200). Optionally, the mass ratio may specifically be 100:10, 100:40, 100:60, 100:100, 100:130, 100:160, or 100:200, etc., or may be other values within the range, may be selected according to actual requirements, and is not limited herein.

In some implementations, the carbon coating is the liquid phase carbon coating, and a step includes: a mixture obtained by mixing the complex with a liquid phase carbon source is carbonized to obtain the anode material.

In some implementations, a mass ratio of the liquid phase carbon source to the active substance is 100:(5-300). Optionally, the mass ratio may specifically be 100:5, 100:10, 100:60, 100:150, 100:200, 100:240, or 100:300, etc., or may be other values within the range, may be selected according to actual requirements, and is not limited herein.

In some implementations, the liquid phase carbon source includes at least one of n-hexane, toluene, benzene, xylene, methanol, ethanol, propanol, butanol, pentanol, acetone, butanone, 2-pentanone, methyl acetate, ethyl acetate, propyl acetate, butyl acetate, and amyl acetate.

In some implementations, the carbonization temperature is 400 °C-800 °C, and the carbonization time is 1 h-15 h. Optionally, the temperature may specifically be 400 °C, 500 °C, 600 °C, 700 °C, or 800 °C, etc., and the time may specifically be 1 h, 3 h, 5 h, 7 h, 9 h, 10 h, 12 h, 13 h, or 15 h, etc., or may be other values within the range, may be selected according to actual requirements, and is not limited herein.

In third aspect, the present disclosure provides a battery. The battery includes the anode material or an anode material prepared by the preparation method. The battery may be an electrochemical device such as lithium ion battery, a sodium ion battery, etc., which is not limited herein.

It will be understood by those skilled in the art that the method for preparing lithium ion battery described above is only embodiments. Other methods commonly used in the art may be used without departing from the contents disclosed in the present disclosure.

The embodiments of the present disclosure are further described below with a plurality of embodiments. The embodiments of the present disclosure are not limited to the following specific embodiments. Changes may be implemented appropriately within the scope of unchanged primary rights.

Test method:
1. Testing for compactness β: an anode material with mass of m₁ g is soaked in a hydrofluoric acid solution with a mass fraction of 20% for 1 hour, then washed and dried to obtain m₂ g of a material, and surface compactness of the anode material is obtained through calculated, where β= m₂/m₁×100%.
2. Thickness of a coating layer: section treatment is performed on the material by using an FIB-SEM device, and measurement is performed in an SEM to obtain an average thickness of the coating layer.
3. Method for testing pore volumes and proportions of carbon matrix and anode material with silicon particles removed:
   The pore volume of the carbon matrix refers to a total capacity of pores owned by the carbon matrix per unit mass, and the pore volume of the carbon matrix may be measured through gas adsorption measurement. Nitrogen adsorption is a technology for characterizing the porosity and pore size distribution of a material by condensing a gas in the aperture gaps of a solid. As the pressure increases, the gas is first condensed in the aperture gaps with minimum diameters, and the pressure increases until reaching a saturation point, and all the aperture gaps at the saturation point are filled with liquid. Then, a nitrogen pressure gradually reduces to evaporate the liquid from a system. Analysis of adsorption and desorption isotherms can determine the pore volume and pore size distribution, as well as the proportions of the respective pore volumes of the micropores, mesopores, and macropores in the total pore volume. A manner of removing silicon particles from the anode material: a nitric acid solution with a concentration of 1 M is added in the anode material for soaking for 4 h; then an HF acid solution with a 20% mass fraction is added dropwise to the anode material, yellow smoke is produced, and the acid solution is repeated added dropwise for a plurality of times, until there no yellow smoke produced in the solution; and finally, the nitric acid solution with the concentration of 1 M is used again to eliminate residue, and then washing and drying are performed to obtain the anode material with the active substance removed.
4. Testing for gas production:
   Carboxymethyl Cellulose (CMC) is dispersed in water according to a mass ratio of 1.4% for gluing, and after uniform dispersion, 10 g of glue liquid and 10 g of the anode material are mixed to obtain slurry; the slurry is put into an aluminum plastic film bag, and the mass of the slurry is recorded; and then sealing is performed to form a sealed aluminum plastic film bag.
   The sealed aluminum plastic film bag is fixed at a bottom of a container and completely soaked in water, and a volume of the aluminum plastic film bag is recorded; after a fixation time (24 h), the volume of the aluminum plastic film bag is recorded again; and gas production of a silicon anode material is calculated according to changes in a volume of an aluminum plastic film, in mL/g.
5. Type of silicon particles: the type of the silicon particles is determined by using a diffraction peak measured using an XRD.
6. Testing for mass content of silicon in anode material:
   A box atmosphere furnace (Brand: Nanyang Xinyu Furnaces Co., Ltd, and model: SA2-9-17TP) is used for burning under an oxygen atmosphere, causing silicon in a sample to react with silicon oxide to become silica; and carbon is burned and discharged as carbon dioxide, and the mass content of the silicon in the anode material is weighed and calculated.
8. Testing for powder resistivity:
   Volume resistivity of a sample is determined by a four-probe method. The resistance of a powder at five pressure points of 4, 8, 12, 16, 20 KN is tested respectively by using an instrument, and then the conductivity and resistivity of the powder are automatically calculated by a computer.
9. Testing for mass content of trace metal element in carbon matrix:
   A mass content of each trace metal element (Fe, Co, Ni, Cr, Zn, Cu, Al, etc.) in the carbon matrix is tested by using an Inductively Coupled Plasma (ICP) emission spectroscopy, and the model of a test device is PEoptima 8000.
10. Testing for mass content of carbon in anode material:
   A G4 ICARUS HF/CS-i infrared carbon sulfur analyzer from Bruker/Eltra is used; a sample is burned at a high temperature in an oxygen-enriched state, and the contained carbon is oxidized into carbon dioxide and enters an infrared detector with a carrier gas; and quantitative statistics is performed by analyzing the changes in infrared absorption wavelength intensity of carbon dioxide signals, so as to calculate the content of the carbon.
11. Electrical performance testing:
   electrochemical cycling performance is tested by using the following method: the anode material, a conductive agent, and a binder are dissolved and mixed in a solvent according to a mass percentage of 94:1:5, a solid content is controlled at 50%, the mixture is coated on a copper foil current collector, and vacuum drying is performed to prepare an anode plate; and then, a ternary positive electrode plate prepared by a traditional mature process, 1 mol/L of LiPF₆/EC+DMC+EMC (v/v=1:1:1) electrolyte, a Celgard2400 diaphragm, and a housing are assembled into a 18650 cylindrical single-cell battery by using a conventional production process. A charging and discharging test of the cylindrical battery is performed on a LAND battery test system of Wuhan Jinnuo Electronics Co., Ltd, at a normal temperature condition, charging and discharging are performed at a constant current of 0.2 C, and charging and discharging voltages are limited at 2.75-4.2 V.

It is to be noted that, the average particle size of the silicon particles of a silicon source deposited in the carbon matrix is 0.1 nm-50 nm, the purity of the silicon particles is greater than 99%, the thickness of the coating layer is 1 nm-300 nm, and a mass proportion of the coating layer in the anode material is ≤10%.

### Embodiment 1:

(1) Bamboo carbon was used as a raw material, carbonized, and then subjected to acid washing, so as to obtain a porous carbon matrix.
(2) The carbon matrix with pores was added to a 2 mol/L copper nitrate solution, soaked for 0.5 hours, and then subjected to vacuum drying at 80 °C, so as to obtain a carbon matrix containing a catalyst.
(3) The carbon matrix containing the catalyst was placed in a CVD reaction chamber, the reaction chamber was repeatedly purged for 3-5 min with nitrogen, then the nitrogen was closed, an argon gas was introduced, a flow was 400 sccm, a temperature was heated to 500 °C, a heating rate was 8 °C/min, after the temperature was held for 1 h, monosilane was opened, a mixed gas of the monosilane and the argon was introduced in a CVD device, a volume concentration ratio of the monosilane to the argon was 1:3 (a concentration of a silicon-containing gas was 25%), a concentration of the total gas was 100 sccm, temperature holding was performed for 5 h, then a silane gas was closed, and a complex was obtained by cooling to room temperature.
(4) A phenolic resin and the complex were mixed according to a mass ratio of 1:4, a VC mixing machine was used for mixing for 10 min, then the mixed material was placed in a high temperature box furnace, vacuum pumping was performed to 5 kPa, the nitrogen was introduced, carbonization was performed at 580 °C and 5 kPa, temperature holding was performed for 2 h, then the product was crushed and sieved after cooling, and then grading was performed to obtain an anode material.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 2:

A difference between this embodiment and Embodiment 1 lied in that, (2) the carbon matrix with pores was added to a 2 mol/L iron nitrate solution, soaked for 0.5 hours, and then subjected to vacuum drying at 80 °C, so as to obtain a carbon matrix containing a catalyst.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 3:

A difference between this embodiment and Embodiment 1 lied in that, (2) the carbon matrix with pores was added to a 0.7 mol/L boric acid solution, soaked for 0.5 hours, and then treated at 900 °C, so as to obtain a carbon matrix containing a catalyst.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 4:

A difference between this embodiment and Embodiment 1 lied in that,
(2) the carbon matrix with pores and nickel carbonate were mixed according to a mass ratio of 100:2, then dried, and treated at 960 °C, so as to obtain a carbon matrix containing a catalyst.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 5:

A difference between this embodiment and Embodiment 1 lied in that,
(4) a epoxy resin and the complex were mixed according to a mass ratio of 1:3, a VC mixing machine was used for mixing for 10 min, then the mixed material was placed in a high temperature box furnace, vacuum pumping was performed to 5 kPa, the nitrogen was introduced, carbonization was performed at 580 °C and 5 kPa, temperature holding was performed for 2 h, then the product was crushed and sieved after cooling, and then grading was performed to obtain an anode material.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 6:

A difference between this embodiment and Embodiment 1 lied in that,
(4) a phenolic resin and the complex were mixed according to a mass ratio of 1:4, a VC mixing machine was used for mixing for 10 min, then the mixed material was placed in a high temperature box furnace, vacuum pumping was performed to 5 kPa, the nitrogen was introduced, carbonization was performed at 680 °C and 5 kPa, temperature holding was performed for 2 h, then the product was crushed and sieved after cooling, and then grading was performed to obtain an anode material.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 7:

A difference between this embodiment and Embodiment 1 lied in that,
(4) a phenolic resin and the complex were mixed according to a mass ratio of 1:4, a VC mixing machine was used for mixing for 10 min, then the mixed material was placed in a high temperature box furnace, vacuum pumping was performed to 5 kPa, the nitrogen was introduced, carbonization was performed at 720 °C and 5 kPa, temperature holding was performed for 2 h, then the product was crushed and sieved after cooling, and then grading was performed to obtain an anode material.

### Embodiment 8:

A difference between this embodiment and Embodiment 1 lied in that,
(4) a phenolic resin and the complex were mixed according to a mass ratio of 1:4, a VC mixing machine was used for mixing for 10 min, then the mixed material was placed in a high temperature box furnace, vacuum pumping was performed to 5 kPa, the nitrogen was introduced, carbonization was performed at 800 °C and 5 kPa, temperature holding was performed for 2 h, then the product was crushed and sieved after cooling, and then grading was performed to obtain an anode material.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 9:

A difference between this embodiment and Embodiment 1 lied in that,
(3) The carbon matrix containing the catalyst was placed in a CVD reaction chamber, the reaction chamber was repeatedly purged for 3-5 min with nitrogen, then the nitrogen was closed, an argon gas was introduced, a flow was 400 sccm, a temperature was heated to 500 °C, a heating rate was 8 °C/min, after the temperature was held for 1 h, monosilane was opened, a mixed gas of the monosilane and the argon was introduced in a CVD device, a volume concentration ratio of the monosilane to the argon was 1:8 (a concentration of a silicon-containing gas was 11.1%), a concentration of the total gas was 100 sccm, temperature holding was performed for 5 h, then a silane gas was closed, and a complex was obtained by cooling to room temperature.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 10:

A difference between this embodiment and Embodiment 1 lied in that,
(3) the carbon matrix containing the catalyst was placed in a CVD reaction chamber, the reaction chamber was repeatedly purged for 3-5 min with nitrogen, then the nitrogen was closed, an argon gas was introduced, a flow was 400 sccm, a temperature was heated to 500 °C, a heating rate was 8 °C/min, after the temperature was held for 1 h, silane was opened, a mixed gas of the silane and the argon was introduced in a CVD device, a volume concentration ratio of the silane to the argon was 1:5 (a concentration of a silicon-containing gas was 16.7%), a concentration of the total gas was 100 sccm, temperature holding was performed for 5 h, then a silane gas was closed, and a complex was obtained by cooling to room temperature.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 11:

A difference between this embodiment and Embodiment 1 lied in that,
(3) the carbon matrix containing the catalyst was placed in a CVD reaction chamber, the reaction chamber was repeatedly purged for 3-5 min with nitrogen, then the nitrogen was closed, an argon gas was introduced, a flow was 400 sccm, a temperature was heated to 500 °C, a heating rate was 8 °C/min, after the temperature was held for 1 h, silane was opened, a mixed gas of the silane and the argon was introduced in a CVD device, a volume concentration ratio of the silane to the argon was 1:3 (a concentration of a silicon-containing gas was 25%), a concentration of the total gas was 100 sccm, temperature holding was performed for 5 h, then a silane gas was closed, and a complex was obtained by cooling to room temperature.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Embodiment 12:

A difference between this embodiment and Embodiment 1 lied in that,
(3) the carbon matrix containing the catalyst was placed in a CVD reaction chamber, the reaction chamber was repeatedly purged for 3-5 min with nitrogen, then the nitrogen was closed, an argon gas was introduced, a flow was 400 sccm, a temperature was heated to 500 °C, a heating rate was 8 °C/min, after the temperature was held for 1 h, silane was opened, a mixed gas of the silane and the argon was introduced in a CVD device, a volume concentration ratio of the silane to the argon was 1:4 (a concentration of a silicon-containing gas was 20%), a concentration of the total gas was 100 sccm, temperature holding was performed for 8 h, then a silane gas was closed, and a complex was obtained by cooling to room temperature.

The anode material prepared in this embodiment included a carbon matrix, silicon particles, and a coating layer located on a surface of a silicon-based active substance, partial silicon particles were located in pores of the carbon matrix, and the coating layer included a carbon layer.

### Comparative embodiment 1:

(1) Bamboo carbon was used as a raw material, carbonized, and then subjected to acid washing, so as to obtain a porous carbon matrix.
(2) The carbon matrix with pores was added to a 2 mol/L copper nitrate solution, soaked for 0.5 hours, and then subjected to vacuum drying at 80 °C, so as to obtain a carbon matrix containing a catalyst.
(3) The carbon matrix containing the catalyst was placed in a CVD reaction chamber, the reaction chamber was repeatedly purged for 3-5 min with nitrogen, then the nitrogen was closed, an argon gas was introduced, a flow was 400 sccm, a temperature was heated to 500 °C, a heating rate was 8 °C/min, after the temperature was held for 1 h, monosilane was opened, a mixed gas of the silane and the argon was introduced in a CVD device, a volume concentration ratio of the monosilane to the argon was 1:3 (a concentration of a silicon-containing gas was 25%), a concentration of the total gas was 100 sccm, temperature holding was performed for 5 h, then a silane gas was closed, and a complex was obtained by cooling to room temperature.

The anode material prepared in this embodiment included a carbon matrix and silicon particles.

### Comparative embodiment 2:

(1) Bamboo carbon was used as a raw material, carbonized, and then subjected to acid washing, so as to obtain a porous carbon matrix.
(2) The carbon matrix was placed in a CVD reaction chamber, the reaction chamber was repeatedly purged for 3-5 min with nitrogen, then the nitrogen was closed, an argon gas was introduced, a flow was 400 sccm, a temperature was heated to 500 °C, a heating rate was 8 °C/min, after the temperature was held for 1 h, silane was opened, a mixed gas of the silane and the argon was introduced in a CVD device, a volume concentration ratio of the monosilane to the argon was 1:3 (a concentration of a silicon-containing gas was 25%), a concentration of the total gas was 100 sccm, temperature holding was performed for 5 h, then a silane gas was closed, and a complex was obtained by cooling to room temperature.

(4) A phenolic resin and the complex were mixed according to a mass ratio of 1:4, a VC mixing machine was used for mixing for 10 min, then the mixed material was placed in a high temperature box furnace, vacuum pumping was performed to 5 kPa, the nitrogen was introduced, carbonization was performed at 580 °C and 5 kPa, temperature holding was performed for 2 h, then the product was crushed and sieved after cooling, and then grading was performed to obtain an anode material.

The anode material prepared in this embodiment included a carbon matrix, silicon particles, and a coating layer located on a surface of a silicon-based active substance, partial silicon particles were located in pores of the carbon matrix, and the coating layer included a carbon layer.

**Table 1. Parameters of anode material with silicon particles removed**

| Performance parameter | Total pore volume cm³/g | Specific surface area m²/g | Pore volume proportion % of pores below 10 nm | Pore volume proportion % of pores below 5 nm | Pore volume proportion % of pores below 2 nm |
|---|---|---|---|---|---|
| Embodiment 1 | 1.30 | 1587 | 95.3 | 89.6 | 82.3 |
| Embodiment 2 | 1.35 | 1546 | 96.2 | 85.9 | 78.8 |
| Embodiment 3 | 1.36 | 1691 | 95.8 | 90.1 | 82.7 |
| Embodiment 4 | 1.34 | 1608 | 95.5 | 88.5 | 81.3 |
| Embodiment 5 | 1.30 | 1587 | 95.3 | 89.6 | 82.3 |
| Embodiment 6 | 1.30 | 1587 | 95.3 | 89.6 | 82.3 |
| Embodiment 7 | 1.30 | 1587 | 95.3 | 89.6 | 82.3 |
| Embodiment 8 | 1.30 | 1587 | 95.3 | 89.6 | 82.3 |
| Embodiment 9 | 1.30 | 1587 | 95.3 | 89.6 | 82.3 |
| Embodiment 10 | 1.30 | 1587 | 95.3 | 89.6 | 82.3 |
| Embodiment 11 | 1.30 | 1587 | 95.3 | 89.6 | 82.3 |
| Embodiment 12 | 1.30 | 1587 | 95.3 | 89.6 | 82.3 |
| Comparative embodiment 1 | 1.46 | 2311 | 88.5 | 75.2 | 55.8 |
| Comparative embodiment 2 | 1.28 | 1570 | 89.2 | 82.4 | 73.5 |

**Table 2: Parameters of anode material**

| Performanc e parameter | Silicon content % | Com pact ness % | Total pore volume cm³/g | Pore volume proporti on % of pores below 10 nm in anode material | Average aperture nm of pores | Volume proporti on of microp ores | Volume proportion of mesopores | Volume proportio n of macropor es | Trace metal element ppm |
|---|---|---|---|---|---|---|---|---|---|
| Embodimen t 1 | 50 | 84 | 0.013 | 84.3 | 2.94 | 1.3 | 85.6 | 13.1 | 100 |
| Embodimen t 2 | 50 | 86 | 0.012 | 85.2 | 1.76 | 5.7 | 80.2 | 14.1 | 66.7 |
| Embodimen t 3 | 50 | 89 | 0.011 | 80.2 | 2.07 | 8.9 | 88.4 | 2.7 | 133.3 |
| Embodimen t 4 | 50 | 87.5 | 0.009 | 83.2 | 11.99 | 6.0 | 87.5 | 6.5 | 50 |
| Embodimen t 5 | 50 | 92.3 | 0.011 | 84.1 | 2.18 | 10 | 85.6 | 4.4 | 150 |
| Embodimen t 6 | 50 | 95.2 | 0.013 | 83.5 | 3.54 | 3.9 | 80.1 | 16.0 | 95 |
| Embodimen t 7 | 50 | 91.6 | 0.014 | 83.3 | 5.28 | 5 | 85 | 10 | 96 |
| Embodimen t 8 | 50 | 81 | 0.020 | 83.2 | 1.91 | 8 | 87 | 5 | 80 |
| Embodimen t 9 | 41.7 | 84.2 | 0.015 | 83.7 | 4.53 | 6.1 | 84.9 | 9 | 120 |
| Embodimen t 10 | 43.3 | 83.8 | 0.008 | 81.9 | 21.83 | 9.9 | 89.3 | 0.8 | 103.3 |
| Embodimen t 11 | 48.6 | 83.5 | 0.006 | 84.7 | 6.26 | 5.9 | 85.5 | 8.6 | 116.7 |
| Embodimen t 12 | 46.2 | 83.6 | 0.007 | 82.1 | 33.82 | 5.2 | 91.8 | 3 | 128.6 |
| Comparativ e embodiment 1 | 50 | 69 | 0.025 | 76.4 | 1.86 | 12.2 | 71.0 | 16.8 | 25 |
| Comparativ e embodiment 2 | 50 | 75 | 0.039 | 78.3 | 1.65 | 1.0 | 90.9 | 8.1 | 75 |

**Table 3: Parameters of anode material**

| Performance parameter | Median particle size µm | Specific surface area m²/g | Thickness nm of coating layer | (D₉₀D_{1 0})/D₅₀ | Compactio n density g/cm³ | Tap density g/cm³ | Powder conductivity at 20 kN S/cm |
|---|---|---|---|---|---|---|---|
| Embodiment 1 | 5.5 | 3.6 | 22 | 1.4 | 1.05 | 1.0 | 1.29 |
| Embodiment 2 | 5.9 | 6.5 | 18 | 1.6 | 1.0 | 1.1 | 0.67 |
| Embodiment 3 | 6.1 | 3.2 | 45 | 2.3 | 1.1 | 1.2 | 0.82 |
| Embodiment 4 | 5.8 | 5.4 | 50 | 2.8 | 1.0 | 0.95 | 1.06 |
| Embodiment 5 | 6.8 | 5.7 | 76 | 1.4 | 0.9 | 1.0 | 4.98 |
| Embodiment 6 | 6.6 | 6.1 | 100 | 1.3 | 0.9 | 1.0 | 1.63 |
| Embodiment 7 | 8.9 | 7.9 | 80 | 3.7 | 1.0 | 0.9 | 3.76 |
| Embodiment 8 | 6.9 | 6.3 | 15 | 2.3 | 1.2 | 1.2 | 2.09 |
| Embodiment 9 | 5.6 | 5.3 | 25 | 2.2 | 1.0 | 0.7 | 1.37 |
| Embodiment 10 | 4.8 | 1.7 | 28 | 4.9 | 1.2 | 1.1 | 1.58 |
| Embodiment 11 | 4.5 | 8.5 | 19 | 2.5 | 1.25 | 1.2. | 1.23 |
| Embodiment 12 | 5.1 | 9.6 | 20 | 2.8 | 1.3 | 1.3 | 0.99 |
| Comparative embodiment 1 | 5.8 | 35.1 | 0 | 1.3 | 0.9 | 1.0 | 0.04 |
| Comparative embodiment 2 | 4.3 | 10.5 | 2 | 1.4 | 0.9 | 0.9 | 0.49 |

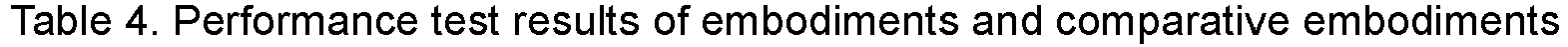

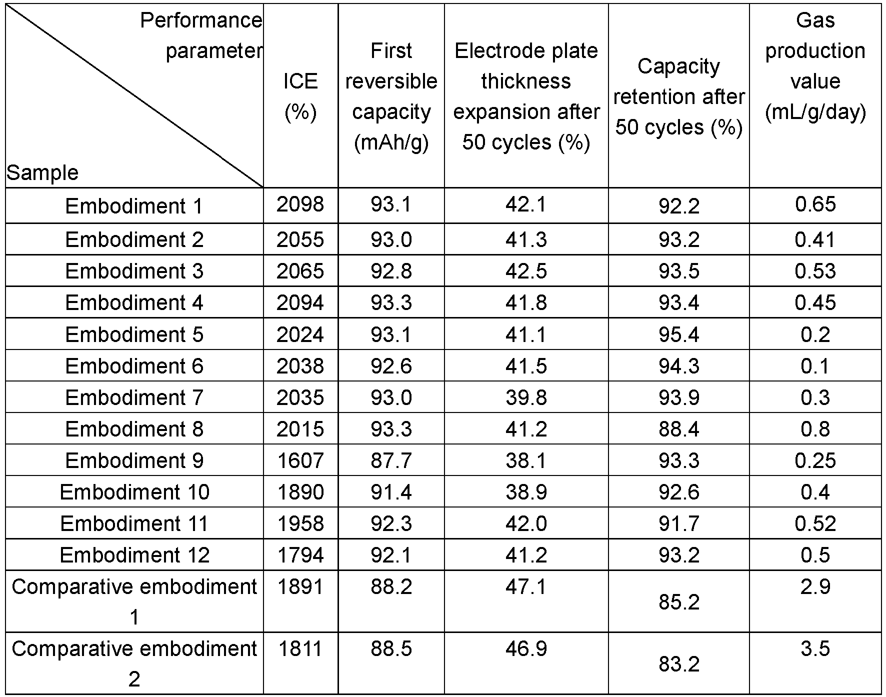

According to data in Table 1 to Table 4, it might be learned that, in Embodiments 1-4, the related impact of the surface compactness of the anode material and the catalyst in the carbon matrix was mainly explored when silicon contents were close. According to the data, it might be learned that, compared to Embodiments 1-2 or Embodiment 4, in Embodiment 3, the total pore volume of the anode material with silicon particles removed was larger, and more aperture gaps can house the catalyst, such that in the subsequent carbon coating processes, the thickness of the coating layer was also affected, the surface compactness of the anode material in Embodiment 3 was relatively high, and different catalysts had little effect on the coating layer on the surface of the anode material.

According to data in Tables 1-4, it might be learned that, in Embodiments 5-8, the related impact of the surface compactness of the anode material and the thickness of the coating layer was mainly explored when the silicon contents were close. According to the data, it might be learned that, in Embodiment 1 and Embodiments 5-8, compared to Embodiment 1, in Embodiment 5, the addition of the coating material was increased, and the surface compactness of the anode material increased; and compared to Embodiment 1, in Embodiment 6, the carbonization temperature during carbon coating increased, the surface compactness of the anode material also increased. However, as the carbonization temperature continuously increased, the surface compactness of the anode material slightly reduced with the increasing of the temperature, which was attributed to the fact that partial carbon material was gasified due to a too high temperature. Preferably, during carbon coating, the carbonization temperature was preferably 580 °C-720 °C. Due to the presence of suitable amount of the catalyst in the carbon matrix, the carbonization temperature during carbon coating could be reduced, so as to obtain the compact coating layer at a low temperature.

According to data in Tables 1-4, it might be learned that, in Embodiments 9-12, the impact of changes in the silicon content on the anode material was mainly explored. As the silicon content increased, the specific capacity of the anode material increased, and an expansion effect was also increased. Since the surface of the anode material has the coating layer, its surface compactness was not differed much, and the gas production value of the anode material slightly fluctuated.

Compared to Embodiment 1, coating was not performed in Comparative embodiment 1, the surface compactness of the anode material was greatly reduced, a solid state electrolyte membrane formed by the side reactions between the anode material and the electrolyte was thickened, a large number of active lithium ions were consumed at the same time, the ICE of a battery greatly reduced, a volume expansion rate of the battery after cycling also increased, and the gas production value increased.

The catalyst was not added to the anode material prepared in Comparative embodiment 2. Since there was no catalyst in the carbon matrix, the carbon material was difficultly filled in the aperture gaps in the carbon matrix, the carbon material was mainly coated at a surface layer of the anode material, and the total pore volume of the anode material increased significantly. Meanwhile, the surface compactness of the anode material reduced, and the gas production value of the anode material significantly increased.

The structure, features, and effects of the present disclosure are described in detail through the embodiments shown in the drawings. The foregoing description is merely preferred embodiments of the present disclosure, and the present disclosure does not limit the scope of implementation as shown in the drawing. All changes made according to the concept of the present disclosure or modified equivalent embodiments with equivalent changes shall fall within the protection scope of the present disclosure without departing from the spirit of the specification and drawings.

## Claims

1. An anode material, comprising an active substance, wherein surface compactness of the anode material is β, and β≥80%; and
β is measured by the following test methods:
the anode material with mass of m₁ g is soaked in a hydrofluoric acid solution with a mass fraction of 20% for 1 hour, then washed and dried to obtain m₂ g of a material, and the surface compactness of the anode material is obtained through calculated, wherein β= m₂/m₁×100%.

2. The anode material according to claim 1, wherein the active substance comprises a carbon matrix and silicon particles, and at least part of the silicon particles are located in particles of the carbon matrix.

3. The anode material according to claim 1, wherein the anode material has pores, the pores comprise micropores and mesopores; and a ratio of a pore volume of the micropores to a pore volume of the mesopores is (1-45):(55-99).

4. The anode material according to claim 3, wherein the anode material has at least one of the following features:
(1) a pore volume proportion of the micropores is ≤10%;
(2) a pore volume proportion of the mesopores is ≥80%;
(3) a pore volume proportion of macropores is ≤20%.

5. The anode material according to claim 1, wherein the anode material has pores, the anode material has at least one of the following features:
(1) a total pore volume of the anode material is 0.001 cm³/g-0.1 cm³/g;
(2) an average aperture of the pores of the anode material is 0.4 nm-50 nm; and
(3) a volume proportion of the pores with apertures below 10 nm in the total pore volume in the anode material is ≥80%.

6. The anode material according to claim 5, wherein the anode material has at least one of the following features:
(1) in the anode material with silicon particles removed, a volume proportion of the pores with apertures below 2 nm in the total pore volume is ≥70%;
(2) in the anode material with the silicon particles removed, a volume proportion of the pores with apertures below 5 nm in the total pore volume is ≥85%;
(3) in the anode material with the silicon particles removed, a volume proportion of the pores with apertures below 10 nm in the total pore volume is ≥95%;
(4) a specific surface area of the anode material with the silicon particles removed is 500 m²/g-2000 m²/g;
(5) a total pore volume of all the pores of the anode material with the silicon particles removed is 0.5 cm³/g-1.5 cm³/g.

7. The anode material according to claim 2, wherein the anode material has at least one of the following features:
(1) the silicon particle comprises at least one of crystalline silicon, silicon oxide, amorphous silicon, silicon alloy, or a composite particle of the crystalline silicon and the amorphous silicon;
(2) an average particle size of silicon particles is 0.1 nm-50 nm;
(3) the carbon matrix comprises the carbon matrix comprises at least one of artificial graphite, natural graphite, amorphous carbon, activated carbon, mesocarbon microbeads, carbon nanotubes, carbon nanofibers, porous carbon, and graphene.

8. The anode material according to claim 2, wherein the anode material has at least one of the following features:
(1) a mass content of silicon in the anode material is 20%-60%;
(2) a mass content of carbon in the anode material is 20%-80%;
(3) the anode material comprises a trace metal element, and the trace metal element comprises at least one of Fe, Co, Ni, Cr, Zn, Cu, and Al;
(4) the anode material comprises the trace metal elements with a mass proportion of ≤200 ppm.

9. The anode material according to claim 1, wherein average gas production of anode slurry that is prepared by the anode material and placed in a 25 °C environment for 7 days is ≤1 mL/g/day.

10. The anode material according to any one of claims 1 to 9, wherein a surface of the anode material has a coating layer, and a material of the coating layer comprises a carbon material.

11. The anode material according to claim 10, wherein the anode material has at least one of the following features:
(1) the carbon material comprises at least one of amorphous carbon and graphitized carbon;
(2) a thickness of the coating layer is 1 nm-300 nm;
(3) a mass proportion of the coating layer in the anode material is ≤10%.

12. The anode material according to any one of claims 1 to 9, wherein the anode material has at least one of the following features:
(1) a median particle size of the anode material is ≤10 µm;
(2) particle size distribution of the anode material meets: 0.9≤(D₉₀-D₁₀)/D₅₀≤5.

13. The anode material according to any one of claims 1 to 9, wherein the anode material has at least one of the following features:
(1) a specific surface area of the anode material is ≤10 m²/g;
(2) a compaction density of the anode material is 0.8 g/cm³-1.3 g/cm³;
(3) a tap density of the anode material is 0.5 g/cm³-1.5 g/cm³.

14. The anode material according to claim 1, wherein powder conductivity of the anode material at 20 kN is 0.5 S/cm-5 S/cm.

15. A battery, comprising the anode material according to any one of claims 1 to 14.
